# EUROPÄISCHE PATENTANMELDUNG

(11) **EP 1 348 507 A1**
(43) Veröffentlichungstag der Anmeldung: **01.10.2003**
(21) Anmeldenummer: 03006926.4
(22) Anmeldetag: 26.03.2003
(51) Int. Cl.: B23B 31/00, B23B 31/16, B23Q 11/08, B23B 31/02, B23Q 11/10, B23Q 16/00

(54) **Spannfutter**

(30) Priorität: 28.03.2002 DE 10214315
(71) Anmelder: Schunk GmbH & Co. KG Fabrik für Spann- und Greifwerkzeuge, 74348 Lauffen (DE)
(72) Erfinder: Übele, André, 71546 Kleinaspach (DE); Gulde, Siegfried, 88515 Langenenslingen (DE)
(74) Vertreter: Paul, Dieter-Alfred, Dipl.-Ing.

(57) **Zusammenfassung**

Die Erfindung beschreibt ein Spannfutter mit einem Futterkörper (1), der einen zentralen Durchlaß (2) für ein zu spannendes Bauteil aufweist, mehreren Spannbacken (4), die in radialen Führungsnuten (3) an der vorderen Stirnseite des Futterkörpers (1) bewegbar angeordnet und durch einen Antrieb verstellbar sind, und einer Büchse (5), die in den Durchlaß (2) eingesetzt ist, welches dadurch gekennzeichnet ist, daß die Büchse an ihrem in den Durchlaß (2) hineinragenden Ende durch einen Boden (10) verschlossen ist.

## Beschreibung

Die vorliegende Erfindung betrifft ein Spannfutter mit einem Futterkörper, der einen zentralen Durchlaß für ein zu spannendes Bauteil aufweist, mehreren Spannbacken, die in radialen Führungsnuten an der vorderen Stirnseite des Futterkörpers bewegbar angeordnet und durch einen Antrieb verstellbar sind, und einer Büchse, welche in den Durchlaß eingesetzt ist.

Spannfutter dieser Art sind allgemein bekannt und werden in der Praxis in vielfältiger Weise zum Einspannen und Bearbeiten von Werkstücken benötigt und eingesetzt. Die herkömmlichen Spannfutter sind üblicherweise als sogenannte Dreibackenfutter ausgebildet und bestehen aus einem formsteifen Futterkörper, der einen zentralen Durchlaß für die Werkstücke aufweist, sowie aus mehreren Spannbacken, die in radialen Führungsnuten des Futterkörpers angeordnet sind und durch einen Antrieb gemeinsam verstellt werden können. In den zentralen Durchlaß des Futterkörpers ist häufig eine Büchse eingesetzt, die den Futterkörper vor Beschädigungen durch das Werkstück sowie vor Verschmutzungen durch Späne oder auch Kühlwasser schützen soll. Bei bekannten Spannfuttern der Firma Schunk vom Typ THW, erfolgt der Einbau der Büchse von der Rückseite des Futterkörpers her, was mit einem sehr hohen Montageaufwand verbunden ist.

Diese Problematik wird durch bekannte Spannfutter, beseitigt, bei denen die Büchse von der Vorderseite des Futterkörpers her eingebaut ist, wobei die Büchse in denjenigen Bereichen, wo die Spannbacken in den Durchlaß des Futters hineinragen, entsprechende Durchtrittsöffnungen für die Spannbacken aufweist.

Problematisch bei allen Ausführungsformen ist allerdings, daß eine Werkstückpositionierung im Durchlaß schwierig ist.

Aufgabe der Erfindung ist es daher, ein Spannfutter der eingangs genannten Art anzugeben, welches eine einfache Positionierung des Werkstückes ermöglicht.

Diese Aufgabe ist erfindungsgemäß dadurch gelöst, daß die Büchse an ihrem in den Durchlaß hineinragenden Ende durch einen Boden verschlossen ist.

Diese Ausführungsform bietet zumindest den Vorteil, daß Späne, Kühlmittel und dergleichen nicht zur Maschinenseite hin aus dem Futterkörper austreten können und insbesondere auch die hinter der Büchse liegende Bereiche des Futterkörpers vor Verschmutzungen geschützt werden. Des weiteren kann an dem Boden ein Axialanschlag für ein zu spannendes Bauteil vorgesehen sein, der zweckmäßigerweise in Axialrichtung verstellbar ist. Besonders bevorzugt ist eine Ausführungsform, in welcher der Axialanschlag motorisch verstellbar ist und die aktuelle Position des Axialanschlags durch entsprechende Detektoren erfaßt und angezeigt wird. Weiterhin können an dem Boden Indexierungsmittel für die Lageorientierung eines Werkstückes ausgebildet sein. Hierdurch wird eine gute Positionierung eines Werkstückes im Durchlaß ermöglicht

Alternativ oder zusätzlich kann in die Büchse von deren rückseitigem Ende her auch wenigstens eine Kühlmittelzuführdüse hineinragen, die im Falle einer geschlossenen Ausbildung der Büchse deren Boden durchgreift.

Gemäß einer Ausführungsform der Erfindung ist vorgesehen, daß die Büchse in den Durchlaß von der vorderen Stirnseite des Futterkörpers her eingesetzt ist, wobei sie dann durch in Umfangsrichtung gesehen zwischen den Durchtrittsöffnungen gelegene Flanschelemente am Futterkörper fixiert ist. Hierdurch wird eine einfache und schnelle Montage erreicht. Dabei können die Flanschelemente an der vorderen Stirnseite des Futterkörpers anliegen. Alternativ können die Flanschelemente auch in entsprechende Ausnehmungen des Futterkörpers eingreifen, wobei zweckmäßigerweise die Tiefe der Ausnehmungen entsprechend der Dikke der Flanschelemente gewählt ist, so daß die Flanschelemente mit der vorderen Stirnseite des Futterkörpers etwa bündig abschließen und auf diese Weise keine Kanten entstehen, an denen man sich verletzen könnte.

In vorteilhafter Weise ist bei einer Montage der Büchse von der Futterkörpervorderseite her vorgesehen, daß die Flanschelemente einen im Bereich der Durchtrittsöffnungen für die Spannbacken abgeflachten Flansch bilden. Bei einem Dreibackenfutter bilden dann die Flanschelemente einen Flansch mit dreieckiger Grundform, wobei die Eckenbereiche abgerundet sein können.

Durch die Abflachungen wird erreicht, daß die radialen Führungsnuten durch den Flansch weniger als bei einer kreisrunden Flanschform verkürzt werden mit der Folge, daß der Verlust an Führungslänge für die Spannbacken gering ist. Die abgeflachte Form kann unabhängig davon, ob die Büchse einen geschlossenen oder offenen Boden besitzt, verwirklicht werden.

Hinsichtlich weiterer vorteilhafter Ausgestaltungen der Erfindung wird auf die Unteransprüche sowie die nachfolgende Beschreibung von Ausführungsbeispielen der Erfindung unter Bezugnahme auf die beiliegende Zeichnung verwiesen. In der Zeichnung zeigt
- Figur 1: ein Spannfutter gemäß der vorliegenden Erfindung in Draufsicht,
- Figur 2: das Spannfutter aus Figur 1 in teilweise geschnittener Vorderansicht entlang der Linie A-A aus Figur 1,
- Figur 3: die Büchse des Spannfutters aus Figur 2 in perspektivischer Ansicht,
- Figur 4: die Büchse aus Figur 3 in Draufsicht,
- Figur 5: die Büchse aus Figur 3 im Schnitt V-V,
- Figur 6: eine der Figur 2 entsprechende Ansicht eines erfindungsgemäßen Spannfutters mit einer endseitig geschlossenen, aus dem Futterkörper rückseitig heraustretenden Büchse und
- Figur 7: eine weitere Ausführungsform eines erfindungsgemäßen Spannfutters in einer der Figur 6 entsprechenden Ansicht.

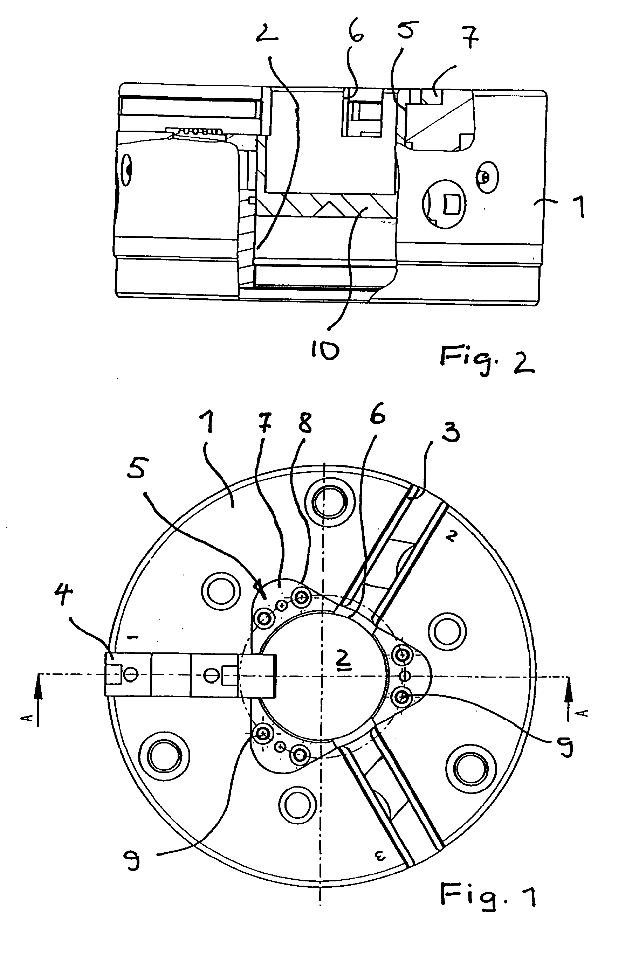

In den Figuren 1 und 2 ist eine erste Ausführungsform eines Spannfutters gemäß der vorliegenden Erfindung dargestellt, das beispielsweise zum Spannen von Werkstücken an Drehmaschinen eingesetzt werden kann. Zu dem Spannfutter gehört ein Futterkörper 1 zylindrischer Grundform, der an seinem rückseitigen Ende an der nicht dargestellten Spindel eine Werkzeugmaschine befestigt werden kann. Der Futterkörper weist einen zentralen Durchlaß 2 auf, in den ein zu spannendes Werkstück eingesetzt werden kann.

Das dargestellte Spannfutter ist in herkömmlicher Weise als Dreibackenfutter ausgebildet. Entsprechend sind an der vorderen Stirnseite des Futterkörpers 1 drei radiale Führungsnuten 3 vorgesehen, die gleichmäßig über den Umfang verteilt, d.h. mit jeweils 120° Versatz gegeneinander angeordnet sind. In die Führungsnuten 3 sind Spannbacken 4 eingesetzt, die durch einen nicht näher dargestellten Antrieb gemeinsam in den Führungsnuten 3 radial verstellt werden können, um ein in den Durchlaß 2 eingesetztes Bauteil zu spannen bzw. wieder freizugeben.

In den zentralen Durchlaß 2 des Futterkörpers 1 ist eine im wesentlichen rohrförmig ausgebildete Büchse 5 eingesetzt, die zum einen dazu dient, den Futterkörper 1 vor Beschädigungen durch ein zu spannendes Bauteil sowie vor Verschmutzungen während des Betriebs zu schützen.

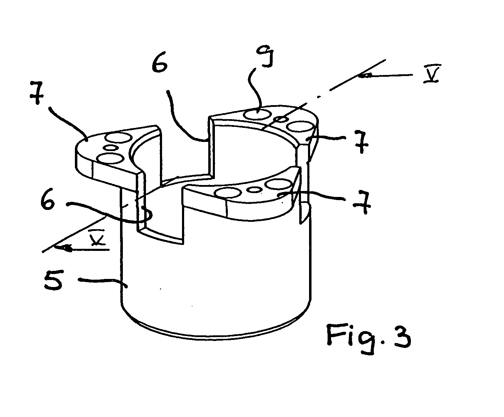

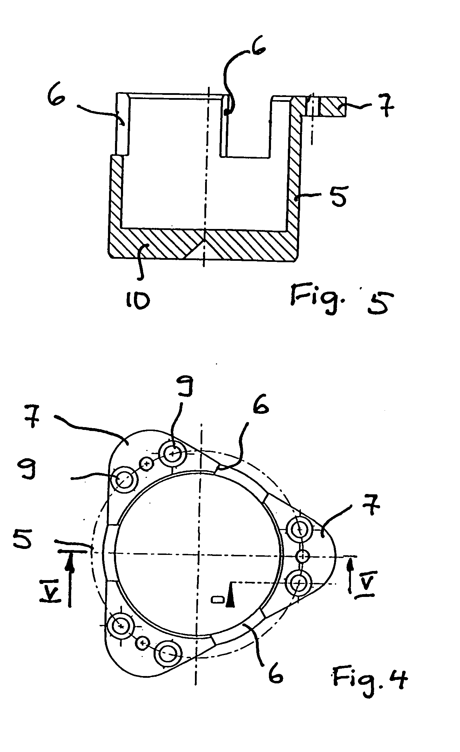

Die Büchse 5 ist erfindungsgemäß in den Futterkörper 1 von dessen Vorderseite her eingesetzt. Wie insbesondere in Figur 2 erkennbar ist, durchgreift sie dabei den Spannbereich des Spannfutters, d.h. den Bereich, in welchem die Spannbacken 4 im Futterkörper 1 bewegbar sind. Aus diesem Grund sind in dem zur Futterkörpervorderseite weisenden Randbereich der Büchse 5 drei Durchtrittsöffnungen 6 vorgesehen, welche von den Spannbacken 4 durchgriffen werden. Die Ausbildung der Büchse 5 ist insbesondere in den Figuren 3 bis 5 gut erkennbar, welche die Büchse 5 des Spannfutters aus Figur 2 in perspektivischer Ansicht, Draufsicht und Schnittansicht zeigen.

Die Fixierung der Büchse 5 am Futterkörper 1 erfolgt durch drei Flanschelemente 7, die in Umfangsrichtung der Büchse 5 betrachtet zwischen den Durchtrittsöffnungen 6 für die Spannbacken 4 am vorderen Ende der Büchse 5 angeordnet sind und, wie die Figuren 1 und 2 gut erkennen lassen, in entsprechende Ausnehmungen 8 in der vorderen Stirnseite des Futterkörpers 1 eingreifen und mit dessen Stirnseite bündig abschließen. In den Flanschelementen 7 sind Durchgangsbohrungen 9 für Befestigungsschrauben zur Anbringung der Büchse 5 am Futterkörper 1 vorgesehen.

In der dargestellten Ausführungsform ist der vordere Randbereich der Büchse 5 im Bereich der Durchtrittsöffnungen abgeflacht ausgebildet und sind die Flanschelemente 7 so ausgebildet, daß sich in der Draufsicht ein Befestigungsflansch dreieckiger Grundform ergibt.

Wie in Figur 2 gut erkennbar ist, ist das in den Futterkörper 1 hineinreichende, hintere Ende der Büchse 5 nicht offen ausgebildet, sondern durch einen Boden 10 verschlossen. Diese Ausführungsform bietet den Vorteil, daß Späne, Kühlmittel und weitere Verschmutzungen nicht durch das hintere Ende der Büchse 5 austreten und die dort befindlichen Teile des Futterkörpers 1 bzw. der Maschine verschmutzen können.

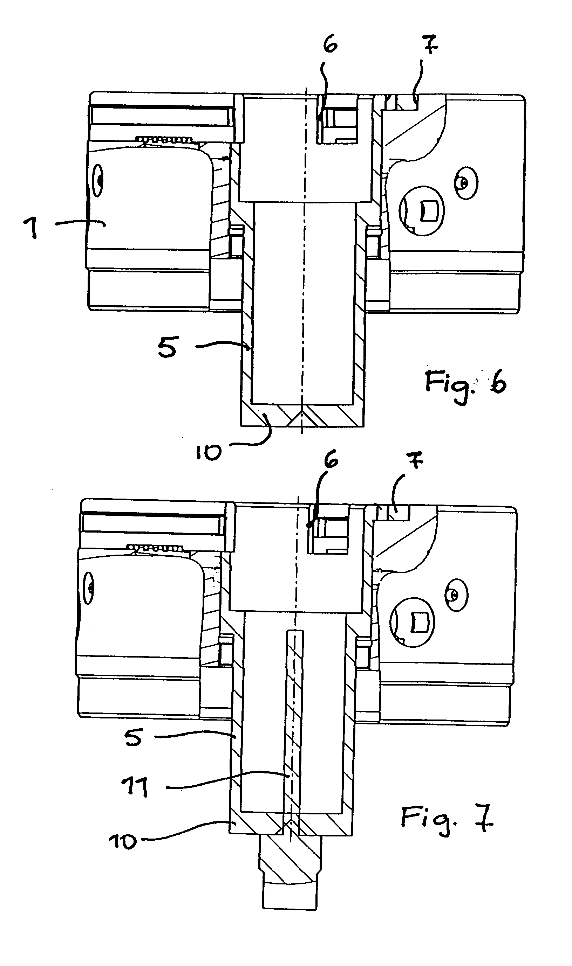

In der Figur 6 ist eine Variante des in Figur 2 dargestellten Futterkörpers 1 gezeigt, bei welcher die Büchse 5 derart verlängert ist, daß ihr hinteres Ende aus dem Futterkörper 1 wieder hinausragt. Mit dieser Büchse 5 können stangen- oder rohrförmige Bauteile so gespannt werden, daß sie deutlich hinter den Spannbereich überstehen, wobei die Vorteile eines geschlossenen Bodens beibehalten werden.

Die Figur 7 zeigt eine weitere Ausgestaltung der in Figur 8 dargestellten Ausführungsform, bei welcher ein Axialanschlag 11 den Boden 10 der Büchse 5 durchgreift. Dieser Axialanschlag 11 ist vorzugsweise motorisch verstellbar, wobei die aktuelle Position durch entsprechende Detektoren ermittelt und auf einem Display angezeigt wird. Durch diesen Axialanschlag 11 ist es möglich, Werkstücke sehr exakt zu spannen.

## Patentansprüche

1. Spannfutter mit einem Futterkörper (1), der einen zentralen Durchlaß (2) für ein zu spannendes Bauteil aufweist, mehreren Spannbacken (4), die in radialen Führungsnuten (3) an der vorderen Stirnseite des Futterkörpers (1) bewegbar angeordnet und durch einen Antrieb verstellbar sind, und einer Büchse (5), die in den Durchlaß (2) eingesetzt ist, **dadurch gekennzeichnet, daß** die Büchse an ihrem in den Durchlaß (2) hineinragenden Ende durch einen Boden (10) verschlossen ist.

2. Spannfutter nach Anspruch 1, **dadurch gekennzeichnet, daß** an dem geschlossenen Ende der Büchse (5) ein Axialanschlag (11) für ein zu spannendes Bauteil vorgesehen ist.

3. Spannfutter nach Anspruch 2, **dadurch gekennzeichnet, daß** der Axialanschlag (11) in Achsrichtung verstellbar ist.

4. Spannfutter nach Anspruch 3, **dadurch gekennzeichnet, daß** der Axialanschlag (11) motorisch verstellbar ist.

5. Spannfutter nach Anspruch 3 oder 4, **dadurch gekennzeichnet, daß** die Position des Axialanschlags (11) erfaßt und angezeigt wird.

6. Spannfutter nach einem der Ansprüche 1 bis 5, **dadurch gekennzeichnet, daß** wenigstens eine Kühlmittelzuführdüse den Boden der Büchse durchgreift und in die Büchse hineinragt.

7. Spannfutter nach einem der vorherigen Ansprüche, **dadurch gekennzeichnet, daß** am Boden der Büchse Indexierungsmittel für die Lageorientierung eines Werkstücks vorgesehen sind.

8. Spannfutter nach einem der vorherigen Ansprüche, **dadurch gekennzeichnet, daß** die Büchse (5) in den Durchlaß (2) von der vorderen Stirnseite des Futterkörpers (1) her eingesetzt ist und an ihrem zur Futterkörpervorderseite weisenden Randbereich Durchtrittsöffnungen (6) für die Spannbacken (4) aufweist.

9. Spannfutter nach Anspruch 8, **dadurch gekennzeichnet, daß** die Büchse (5) durch in Umfangsrichtung gesehen zwischen den Durchtrittsöffnungen (6) gelegene Flanschelemente (7) am Futterkörper (1) fixiert ist.

10. Spannfutter nach Anspruch 9, **dadurch gekennzeichnet, daß** die Flanschelemente (7) an der vorderen Stirnseite des Futterkörpers (1) anliegen.

11. Spannfutter nach Anspruch 9, **dadurch gekennzeichnet, daß** die Flanschelemente (7) in entsprechende Ausnehmungen (8) des Futterkörpers (1) eingreifen.

12. Spannfutter nach Anspruch 11, **dadurch gekennzeichnet, daß** die Ausnehmungen (8) eine der Dicke der Flanschelemente (7) entsprechende Tiefe besitzen, so daß die Flanschelemente (7) mit der vorderen Stirnseite des Futterkörpers (1) fluchten.

13. Spannfutter nach einem der Ansprüche 8 bis 12, **dadurch gekennzeichnet, daß** die Flanschelemente (7) einen im Bereich der Durchtrittsöffnungen (6) für die Spannbacken (4) durchbrochenen und abgeflachten Flansch dreieckiger Grundform bilden.

14. Spannfutter nach Anspruch 13, **dadurch gekennzeichnet, daß** das Spannfutter als Dreibackenfutter ausgebildet ist und die Flanschelemente (7) einen Flansch dreiekkiger Grundform bilden.

15. Spannfutter nach einem der vorherigen Ansprüche, **dadurch gekennzeichnet, daß** die Büchse (5) aus dem Futterkörper (1) an dessen Rückseite wieder austritt.
